# EUROPEAN PATENT APPLICATION

(11) **EP 4 017 020 A1**
(43) Date of publication of application: **22.06.2022**
(21) Application number: 21215845.5
(22) Date of filing: 20.12.2021
(51) Int. Cl.: H04R 1/08, F16B 21/04, F16B 2/06, F16B 37/08, F16B 11/00, F16B 21/06, F16B 9/02

(54) **ACCESSORY CONNECTION ASSEMBLY FOR REMOVABLE ATTACHMENT TO SURFACE**

(30) Priority: 21.12.2020 GB 202020242
(71) Applicant: Beyond Technologies Limited, Telford, Shropshire TF7 4PH (GB)
(72) Inventor: Yu, Tsu Yang, Telford (GB)
(74) Representative: Wynne-Jones IP Limited

(57) **Abstract**

Accessory connection assembly for connecting an accessory to a surface, the assembly comprising: a plug 110 having a bore defined by a side wall thereof and at least two slots 150 disposed in the side wall, the slots being diametrically opposed and forming a through-channel, a socket 120 having a bore defined by a side wall thereof, the bore of the socket being arranged to receive at least a portion of the plug, the socket 120 being arranged to detachably couple with the proximal region of the plug via first coupling means 112, 122; closure means 130 detachably couplable with the distal region of the plug 110 via second coupling means 114, 134 for closing the plug and retaining an accessory within the through-channel; biasing means 140 within the bore of the plug for biasing the accessory toward the distal region of the plug.

## Description

The present invention relates an accessory connection assembly and in a specific embodiment relates to a microphone connection assembly for removable attachment to a surface.

The ability to quickly attach and detach multiple accessories on various devices has become more important with the increase of wirelessly connective devices and provides many advantages over permanently attached accessories such as interoperability. As an example, a high-quality headphone may be provided with a low-quality microphone and so it is advantageous to be able to connect a separate microphone to the headphones. Other examples can include attaching a non-permanent light source to a bicycle helmet or switching between multiple accessories mounted on a medical or construction headset.

US8611579 discloses a microphone assembly removably attached to a surface. The microphone assembly includes microphone support and a coupling assembly that is operable to removably connect the microphone support to the surface. The coupling assembly includes at least one magnet that magnetically and removably attaches the microphone support to the surface.

However, there are disadvantages with such prior art. Magnets do not provide a suitable fixation means and are susceptible to accidental removal, being disconnected easily if they are operated outside of a prescribe manner, for example movement transverse to the magnetic force. Additionally, the existing designs require that a disposable adhesive tape or like is used to attach the base to the headphone for example. Repeated removal of the coupling assembly from the base eventually weakens the adhesive by providing a force in the direction opposite to the adhesive, this eventually leads to failure and the need to replace the tape frequently.

The claimed invention solves the aforementioned problems by providing a click and release design. In embodiments of the claimed invention a force is applied from a lid toward the base which encourages the connection of the base to the attachment surface. A similar force is applied to remove the lid from the base and in doing so promotes the connection between the adhesive and the surface.

According to a first aspect of the present invention, there is provided an accessory connection assembly for connecting an accessory to a surface, the assembly comprising: a plug having a bore defined by a side wall thereof and at least two slots disposed in the side wall of the plug, the slots being disposed at diametrically opposed positions within the wall and forming a through-channel, the slots extending between a proximal and distal region of the plug, a socket having a bore defined by a side wall thereof, the bore of the socket being arranged to receive at least a portion of the plug, the socket being arranged to detachably couple with the proximal region of the plug via first coupling means; closure means detachably couplable with the distal region of the plug via second coupling means, the closure means being arranged to close the bore of the plug to retain an accessory within the through-channel; biasing means disposed within the bore of the plug for biasing the accessory along the bore toward the distal region of the plug.

In an embodiment the first coupling means may comprise define a bayonet type coupling. Wherein the first coupling means may comprise one or more pins which extend radially outwardly from the plug and one or more receiving slots formed within the socket for receiving a respective pin. Wherein the one or more may be disposed towards the proximal region of the plug.

In an embodiment the distal region of the plug may comprise an external screw thread formed on the side wall thereof, and wherein the closure member comprises an internal screw thread formed on an internal surface thereof, wherein the external screw thread of the plug and internal screw thread of the closure means form the second coupling means.

In an embodiment the distal region of the plug may comprise an aperture and the socket may comprise a protrusion extending into the bore thereof and which is arranged to extend through the aperture of the plug when the plug and socket are coupled together. Further comprising an abutment disposed within the bore of the plug, such that when the plug and socket are connected to one another, the protrusion abuts the abutment displacing the abutment towards the proximal end of the plug. Wherein the abutment is arranged to abut the biasing means when the plug and socket are coupled together.

In an embodiment the socket may comprises an attachment means for removably attaching the second coupling means to the surface. Wherein the attachment means may comprise an adhesive.

In an embodiment, the accessory is a microphone.

The invention may be produced in various ways and an embodiment thereof will now be described, by way of example only, reference being made to the accompanying drawings, in which:
Figures 1A and 1B shows an external and cross-sectional view respectively, of the accessory connection assembly in a fully connected arrangement;
Figure 2A and 2B shows an external and cross-sectional view respectively, of the socket;
Figure 3A and 3B shows an external and cross-sectional view respectively, of the plug; and
Figure 4 shows a cross-sectional view of the closure means.

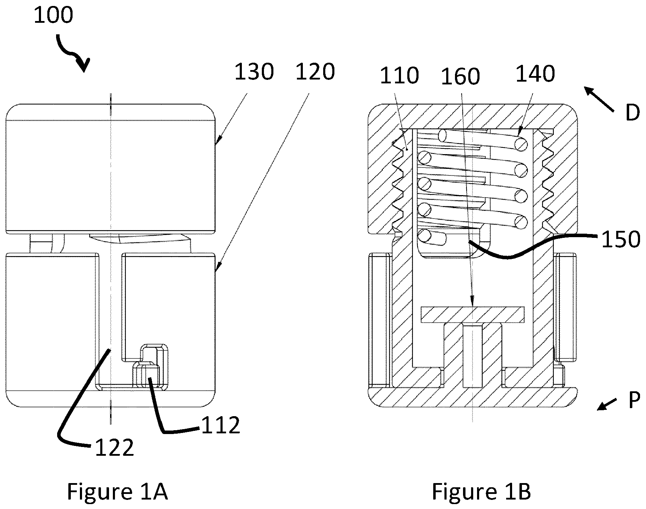

With reference to Figures 1 - 4 an accessory connection assembly (100) is illustrated. The assembly comprises a closure means (130), a plug or first coupling member (110) and a socket or second coupling member (120). In the embodiment shown in Figure 1 the socket (120) is located at the proximal end of the assembly which will be closest to the surface (not shown) to which it is to be attached. The plug and socket are substantially cylindrical and define an internal bore through their bodies, defined by a side wall. The plug (110) is located within the socket (120) and is secured therein by a bayonet-type securing arrangement or first coupling means. The securing arrangement comprises slots (122) formed in the body of the socket and pins (112) located on the proximal end of the external surface of plug (110), and which extend radially outwardly therefrom. In use, the pins are arranged to engage within the slots to secure the plug and socket together. The closure means (130) is connected to the distal end of the plug (110) by cooperating screw threads or second coupling means, namely an internal screw thread (139) formed on an inner surface of the closure means (130) and an external thread (114) disposed on the external surface of the plug (119). The plug defines a through-channel (150) for receiving the accessory, is defined through the body or side wall of the plug (110), as two slots in diametrically opposed positions within the wall and extending between a proximal and distal region of the plug (110). The plug (110) and closure means (130) engage in a split bolt arrangement to retain the accessory with the through-channel (150). A biasing means (140) shown as a resiliently biased spring is partially disposed within the channel, the spring may be free moving within the channel. The spring (140) provides a force against the accessory to assist in removing the accessory and closure means (130) without imparting a force on the socket (120) which could weaken its attachment to the surface.

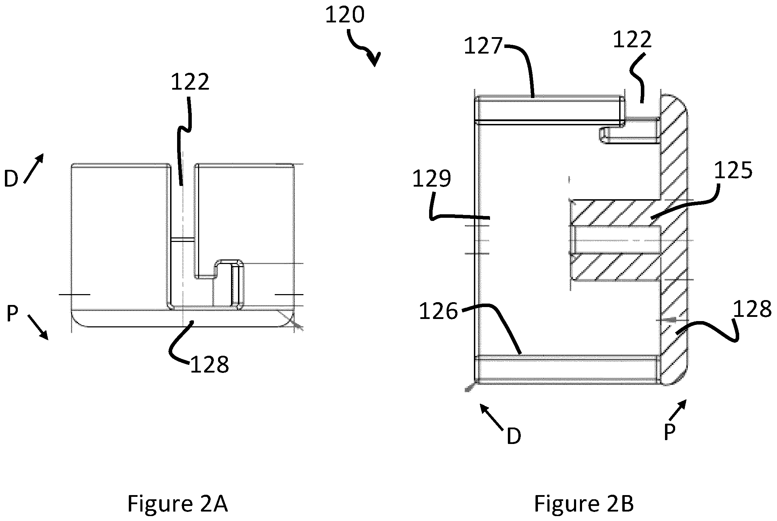

The socket (120), described with specific reference to Figure 2, includes an external surface (127) and an internal surface (126), and an open distal end (129) and closed proximal end (128), these features defining an internal cavity or bore of the socket (120). The slot (122) for engagement with the pins of (112) of the plug (110) is shown to be substantially "L" shaped as is common in bayonet mounts, however, other shapes could be possible. Also shown is protrusion (125) which extends from the closed proximal end towards the open distal end within the bore of the socket (120). The protrusion (125) is configured to pass through an aperture (115) in the proximal end of the plug (110), to abut and provide a force against the spring (140), which in turn provides a force against the accessory.

Not shown is the attachment means used to attach the socket (120) to the surface, but may include adhesive tape, hook and loop fastener, snap fit member or other suitable means.

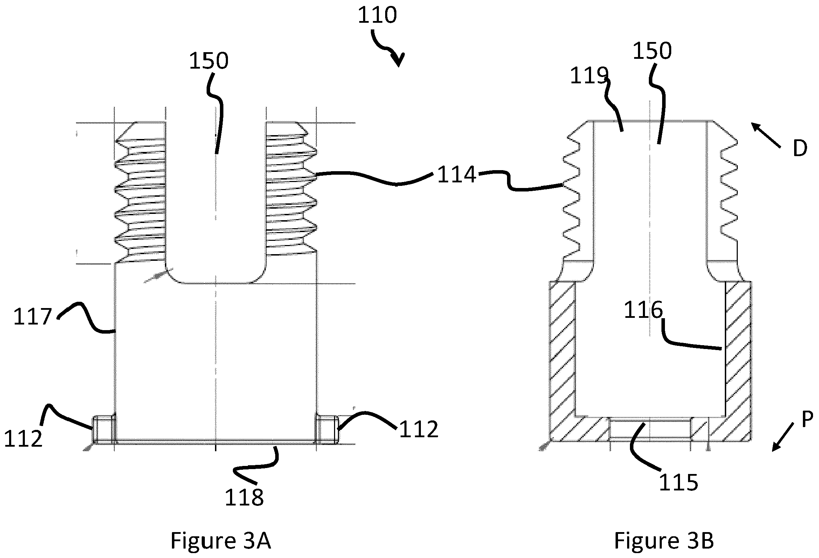

The plug (110), described with specific reference to Figure 3, includes an external surface (117) and an internal surface (116), and an open distal end (119) and a proximal end (118) and an aperture (115) in the proximal end, these features defining an internal cavity or bore of the plug (110). The screw thread (114) for engagement with the internal screw thread (134) of the closure means (130) is shown at the distal end thereof. The through-channel (150) for receiving a portion of the accessory is shown bisecting the distal end (119) where the screw thread is located. The radially extending pins (112) are located on the external surface toward the proximal end for engagement with the slot (122) of the socket (120).

An abutment plate (160) shown in Figure 1 and is located moveably within the bore of the plug (110). The protrusion (125) of the socket (120) is shown abutting the plate (160). When the plug and socket (110,120) are connected, the protrusion contacts the plate (160), displacing the plate (160) toward the open distal end of the plug (119). When the plug and socket (110,120) are connected the plate (160) will engage a proximal end of the resiliently biasing spring (140) (not shown). The plate imparts a force on the spring which in turn imparts a force on any accessory located within the through-channel (150). This force enables easy removal of the closure means (130) and accessory from the assembly, limiting any pulling force on socket connection to the surface.

The accessory to be retained in the through-channel (150) is not shown, but may be a microphone, light emitting device, optical scope, or any other suitable accessory.

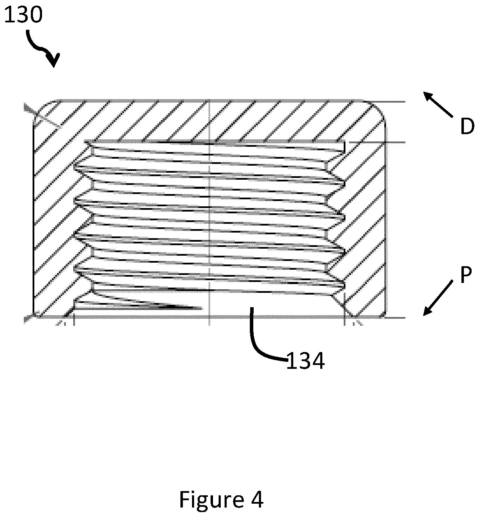

The closure means (130), described with specific reference to Figure 4, includes an external surface and an internal surface, and an open proximal end and closed distal end, the internal screw thread (134) for engagement with the screw thread (114) of plug (110) is shown.

It will be appreciated that the first connection means i.e., the slot and pins of the bayonet mounting could be reversed with respect to the embodiment shown, such that the pins are on the socket (120) and slot on plug (110).

It will be appreciated that the plug(110) could be modified to engage with the external surface of the socket (120), such that radial pins extend inwardly.

The plug and socket (110,120) and closure means (130) are shown to be substantially cylindrical in the Figures, however, other shapes are envisaged.

It will be appreciated that accessory connection assembly (100) could be placed in a reverse direction to that shown in the embodiment of the Figure 1, such that closure means (130) could be attached to the surface at its current "distal" end, which would then be proximal end.

Operation of the assembly (100), in the embodiment as shown in the Figures can be described as follows. The socket (120) is attached to a surface using an adhesive tape at its closed proximal end (128). Preferably the step of placement of the accessory can occur next which includes: placing a portion of an accessory in the through-channel (150) of the plug (110), the accessory can rest against the resiliently basing spring (140), the closure means (130) is then engaged with the plug (110) by respective screw threads (114,134) until the accessory is secured, as the screw threads (114,134) are tightened the spring (140) contacts the accessory and is placed under further tension. Next the plug (110) is inserted into the socket (120) via the open distal end (129), wherein the radial pins (112) of the plug (110) are guided via the slots (122) to the proximal end (128) of the socket (120), the plug (110) is then is then rotated into the locked position. Alternatively, the step of placement of the accessory can occur after the plug (110) and socket (120) have been connected. The assembly (100) is now in its operative configuration. Once operation has been completed the steps may be reversed. Preferably the plug (110) can be released from the socket (120) by rotating the bayonet mount, the act of pressing down to release the mount improves the attachment between the socket (120) and surface. Alternatively, or following, the closure means (130) can be unscrewed and assisted by the resiliently biased spring (140) both the accessory and closure means (130) remove easily without disrupting the connection between the socket (120) and the surface. The assembly is then in a non-operative configuration either partial configured with the plug and socket (110,120) attached or separate, and the assembly (110) ready to be used again.

The invention may be varied according to requirements, including but not limited to physical dimensions or construction materials, having as its objective the ability to provide an improved connection assembly which can better withstand repeated use.

## Claims

1. An accessory connection assembly (100), for connecting an accessory to a surface, the assembly comprising:
a plug (110) having a bore defined by a side wall thereof and at least two slots disposed in the side wall of the plug, the slots being disposed at diametrically opposed positions within the wall and forming a through-channel (150), the slots extending between a proximal and distal region of the plug,
a socket (120) having a bore defined by a side wall thereof, the bore of the socket being arranged to receive at least a portion of the plug (110), the socket (120) being arranged to detachably couple with the proximal region of the plug via first coupling means;
closure means (130) detachably couplable with the distal region of the plug (110) via second coupling means, the closure means (130) being arranged to close the bore of the plug (110) to retain an accessory within the through-channel (150);
biasing means (140) disposed within the bore of the plug (110) for biasing the accessory along the bore toward the distal region of the plug (110).

2. The accessory connection assembly (100) according to claim 1, wherein the first coupling means (112,122) comprises a bayonet type coupling.

3. The accessory connection assembly (100) according to claim 1 or 2, wherein the first coupling means comprises one or more pins (112) which extend radially outwardly from the plug (110) and one or more receiving slots (122) formed within the socket (122) for receiving a respective pin (112).

4. The accessory connection assembly (100) according to claim 3, wherein the one or more pins (112) are disposed towards the proximal region of the plug (110).

5. The accessory connection assembly (100) according to claim 4, wherein the distal region of the plug (110) comprises an external screw thread (114) formed on the side wall thereof, and wherein the closure member (130) comprises an internal screw thread (134) formed on an internal surface thereof, wherein the external screw thread (114) of the plug (110) and internal screw thread (134) of the closure means form the second coupling means.

6. The accessory connection assembly (100) according to claim 4 or 5, wherein the distal region of the plug (110) comprises an aperture (115) and the socket (120) comprise a protrusion (125) extending into the bore thereof and which is arranged to extend through the aperture (115) of the plug (110) when the plug (110) and socket (120) are coupled together.

7. The accessory connection assembly (100) according to claim 6, further comprising an abutment (160) disposed within the bore of the plug (110), such that when the plug (110) and socket (120) are connected to one another, the protrusion abuts the abutment (160) displacing the abutment (160) towards the proximal end of the plug (110).

8. The accessory connection assembly (100) according to claim 7, wherein the abutment (160) is arranged to abut the biasing means (140) when the plug and socket (110,120) are coupled together.

9. The accessory connection assembly (100) according to any preceding claim, wherein the socket (120) comprises attachment means for removably attaching the socket to the surface.

10. The accessory connection assembly (100) according to claim 9, wherein the attachment means comprise an adhesive.

11. The accessory connection assembly (100) according to any preceding claim, wherein the accessory is a microphone.
